# EUROPÄISCHE PATENTSCHRIFT

(11) **EP 0 969 995 B1**
(45) Veröffentlichungstag und Bekanntmachung des Hinweises auf die Patenterteilung: **22.08.2001**
(21) Anmeldenummer: 98917058.4
(22) Anmeldetag: 23.03.1998
(51) Int. Cl.: B60T 8/36

(54) **ELEKTROHYDRAULISCHES AGGREGAT ZUR DRUCKREGELUNG IN BREMSANLAGEN FÜR KRAFTFAHRZEUGE**
ELECTRO-HYDRAULIC UNIT FOR REGULATING PRESSURE IN BRAKE INSTALLATIONS FOR MOTOR VEHICLES
ORGANE ELECTRO-HYDRAULIQUE POUR LA REGULATION DE LA PRESSION DANS LES EQUIPEMENTS DE FREINAGE DE VEHICULES AUTOMOBILES

(30) Priorität: 24.03.1997 DE 19712211
(43) Veröffentlichungstag der Anmeldung: 12.01.2000
(73) Patentinhaber: Continental Teves AG & Co. oHG, 60488 Frankfurt am Main (DE)
(72) Erfinder: DINKEL, Dieter, D-65817 Eppstein (DE); OTTO, Albrecht, D-61137 Schöneck (DE); RISCH, Stephan, D-64331 Weiterstadt (DE); SONNENSCHEIN, Georg, D-65760 Eschborn (DE)
(86) Internationale Anmeldenummer: EP9801694
(87) Internationale Veröffentlichungsnummer: WO9842552

(56) Entgegenhaltungen:
- WO-A-91/16220
- WO-A-94/08830
- DE-A- 4 406 269
- JONNER W -D ET AL: "ANTIBLOCKIERSYSTEM UND ANTRIEBSSCHLUPFREGELUNG DER FUNFTEN GENERATION" ATZ AUTOMOBILTECHNISCHE ZEITSCHRIFT, Bd. 95, Nr. 11, 1.November 1993, Seiten 572-574, 579/580, XP000409587

## Beschreibung

Die Erfindung betrifft ein elektrohydraulisches Aggregat zur Druckregelung in Bremsanlagen für Kraftfahrzeuge mit Nehmerzylindern unterschiedlicher Volumenbedarf nach dem Oberbegriff des Patentanspruchs 1.

Bei einem elektrohydraulischen Aggregat der angegebenen Art gemäß WO94/08830A liegen die Achsen der Aufnahmebohrungen für die Steuerventile in zwei parallelen Ebenen und haben gleiche Abmessungen. Dies wirkt sich auf die Baugröße des Gehäuses ungünstig aus.

Der Erfindung liegt die Aufgabe zugrunde, bei einem Aggregat der eingangs genannten Art den für das Gehäuse benötigten Bauraum zu verkleinern, ohne daß dies mit Funktionsnachteilen und einer Verteuerung der Herstellung verbunden ist.

Diese Aufgabe wird für das Aggregat erfindungsgemäß durch die kennzeichnenden Merkmale des Patentanspruchs 1 gelöst.

Die Erfindung beruht auf der Erkenntnis, daß der bei den meisten Fahrzeugbremsanlagen geringe Volumenbedarf der Nehmerzylinder an der Hinterachse des Fahrzeugs ohne Beeinträchtigung der Funktion eine erhebliche Verkleinerung der Steuerventile zur Regelung des Bremsdrucks dieser Nehmerzylinder ermöglicht und daß die Verkleinerung dieser Steuerventile vorteilhaft dazu benutzt werden kann, den für das Gehäuse des elektrohydraulischen Aggregats benötigten Bauraum zu reduzieren, indem die Aufnahmebohrungen für diese Steuerventile näher zusammengerückt und zu einer Gehäuseseite hin versetzt angeordnet werden. Der hierdurch gewonnene Raum ermöglicht ein näheres Heranrücken der Bohrungen der Druckspeicher an die Gehäusemitte, so daß bei gleichbleibenden Speichervolumen die Baulänge des Gehäuses in Achsrichtung dieser Bohrungen verkürzt werden kann. Befinden sich die Aufnahmebohrungen mit gleichem Durchmesser jeweils in beiden Bohrungsreihen nebeneinander, so kann zusätzlich eine Verkleinerung des Gehäuses in Richtung der Bohrungsreihen erreicht werden. Die geringeren Abmessungen des Gehäuses und der geringere Bearbeitungsaufwand für die kleineren Aufnahmebohrungen und die kleineren Ventilausführungen führen darüberhinaus zu einer Reduzierung der Herstellkosten.

Eine ergänzende Maßnahme zur Verkleinerung der Gehäuseabmessungen kann darin bestehen, daß die Bohrungen der Dämpfungskammern als Stufenbohrungen ausgebildet sind, deren im Durchmesser kleinere Stufe über den Boden der benachbarten Aufnahmebohrungen hinwegragt. Hierbei kann weiterhin vorgesehen sein, daß die Achsen der beiden Stufen der Stufenbohrungen parallel zueinander angeordnet sind, so daß die Lage der kleineren Stufe von der Lage der größeren Stufe bis zu einem gewissen Grade unabhängig ist.

Die Ausgestaltung des elektrohydraulischen Aggregats bietet weiterhin die Möglichkeit, nur durch eine Verlängerung des Gehäuses in einer Richtung, nämlich in Richtung der Bohrungsachsen der Druckspeicher, zwischen den Bohrungen der Druckspeicher und der Dämpfungskammern und den diesen benachbarten Aufnahmebohrungen eine zusätzliche, im Bogen angeordnete Reihe von Aufnahmebohrungen großer Abmessung für die Aufnahme weiterer Steuerventile anzuordnen, die einer automatischen Betätigung der Bremsaniage, z.B. zur Antriebsschlupf- oder Fahrstabilitätsregelung dienen. Die Anordnung dieser zusätzlichen Ventilreihe hat den Vorteil, daß das Bohrbild für die Kanäle zum Verbinden der Aufnahmebohrungen, Anschlußbohrungen und Druckspeicher- und Dämpfungskammerbohrungen bei einem Gehäuse ohne zusätzliche Ventilreihe und einem Gehäuse mit einer zusätzlichen Ventilreihe bis auf kleine Änderungen gleich sein kann und daß nur eine geringe Anzahl zusätzlicher Kanalbohrungen zum Anschluß der zusätzlichen Ventilreihe benötigt wird. Hierdurch wird die spanende Fertigung erleichtert und die Zahl der Werkzeuge bleibt klein. Auch die Montage der Bauelemente ist einfach, da die übereinstimmenden Bauelemente immer an der gleichen Stelle sitzen.

Die Erfindung wird nachfolgend anhand von Ausführungsbeispielen näher erläutert, die in der Zeichnung dargestellt sind. Es zeigen in perspektivischer Transparenzdarstellung
- Figur 1: eine Ansicht von unten des Gehäuses einer ersten Ausführungsform des erfindungsgemäßen Aggregats,
- Figur 2: eine Ansicht des Gehäuses gemäß Figur 1 von oben,
- Figur 3: einen Querschnitt durch das Gehäuse gemäß Figur 1 mit eingebauter Pumpe,
- Figur 4: eine Ansicht von unten des Gehäuses einer zweiten Ausführungsform des erfindungsgemäßen Aggregats und
- Figur 5: eine Ansicht von oben des Gehäuses gemäß Figur 4.

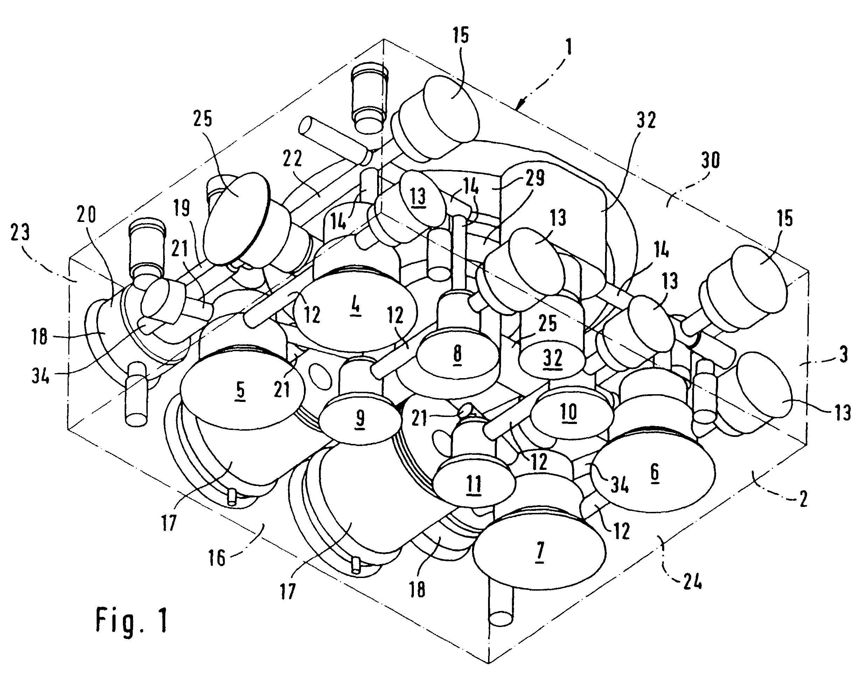

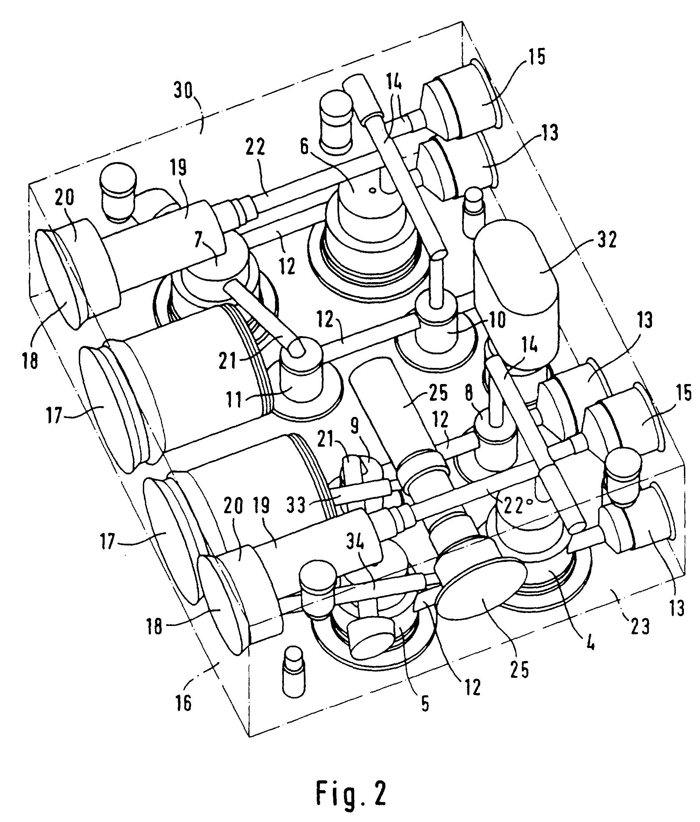

Das in den Figuren 1 und 2 dargestellte Gehäuse 1 hat die Form eines flachen Quaders und ist aus einem spanend bearbeitbaren Material, z.B. einer Aluminiumlegierung hergestellt. Auf der Unterseite 2 des Gehäuses sind in zwei nebeneinanderliegenden und im wesentlichen zu einer Gehäusekante 3 parallelen Reihen zur Gehäusefläche 2 senkrechte Aufnahmebohrungen 4 bis 11 zur Aufnahme elektromagnetischer Steuerventile angeordnet. Jeweils zwei benachbarte Aufnahmebohrungen aus beiden Reihen sind durch Kanalbohrungen 12 miteinander und mit Anschlußbohrungen 13 verbunden, an die zu Nehmerzylindern führende Druckmittelleitungen anschließbar sind. Die Anschlußbohrungen 13 sind in der Gehäusefläche 3 angeordnet und die Kanalbohrungen 12 verlaufen senkrecht zur Gehäusefläche 3. Die Aufnahmebohrungen 4, 8 einerseits und 6, 10 andererseits sind durch rechtwinklig aufeinandertreffende und zu den Gehäuseflächen parallele Kanalbohrungen 14 miteinander und jeweils mit einer Anschlußbohrung 15 für eine zu einem Geberzylinder führende Druckleitung verbunden. Die Aufnahmebohrungen 8 bis 11 liegen in der Mitte zwischen den Aufnahmebohrungen 4 bis 7 und haben einen erheblich kleineren Durchmesser und eine kleinere Tiefe als diese. Die Aufnahmebohrungen 8 bis 11 sind darüberhinaus derart versetzt angeordnet, daß ihr Mittenabstand zur Gehäusefläche 3 kleiner ist als der entsprechende Mittenabstand der Aufnahmebohrungen 4 bis 7. Auf diese Weise wird zwischen den Aufnahmebohrungen 9, 11 und der der Gehäusefläche 3 entgegengesetzten Gehäusefläche 16 ein Freiraum für zwei in der Gehäusefläche 16 angeordnete und für die Aufnahme von Speicherkolben bestimmte und als Druckspeicher dienende Bohrungen 17 geschaffen. Beiderseits der Bohrungen 17 befinden sich in der Gehäusefläche 16 abgestufte Bohrungen 18, die zur Bildung von Dämpfungskammern bestimmt sind. Die kleinere Stufe 19 der Bohrungen 18 ist exzentrisch zur größeren Stufe 20 angeordnet und erstreckt sich bis über den Boden der Aufnahmebohrungen 5, 7. Die Bohrungen 17 sind durch Kanalbohrungen 21 mit den Aufnahmebohrungen 5, 9 bzw. 7, 11 verbunden. Die Bohrungen 18 sind durch Kanalbohrungen 22 mit den Kanalbohrungen 14 verbunden.

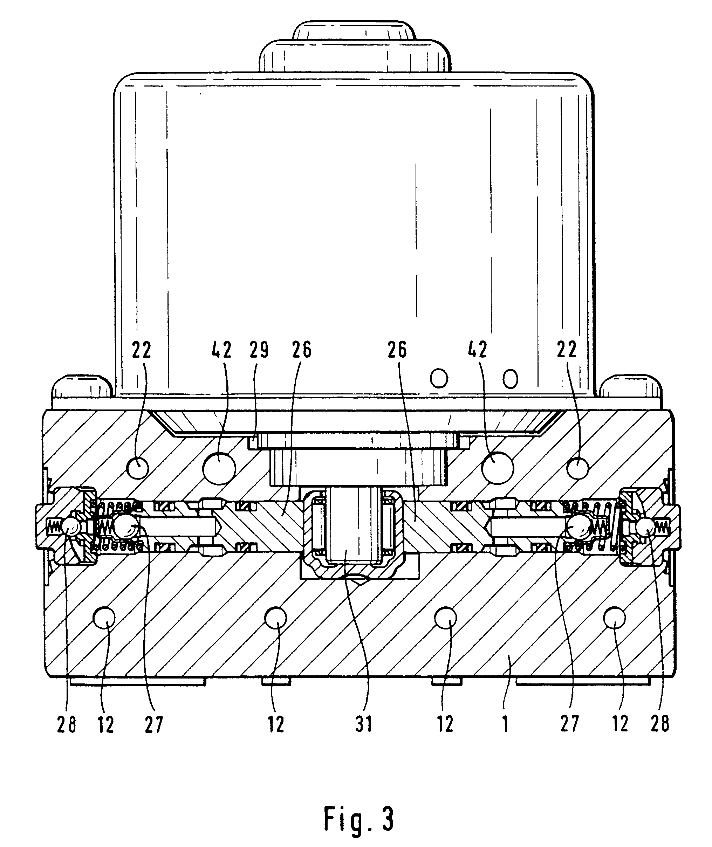

In den seitlichen, einander entgegengesetzten Gehäuseflächen 23, 24, die sich zwischen den Gehäuseflächen 3 und 16 erstrecken, sind zu den Gehäuseflächen 23, 24 senkrechte Zylinderbohrungen 25 angeordnet, die sich innerhalb des Gehäuses 1 zwischen den beiden Reihen der Aufnahmebohrungen 4 bis 11, wie auch zwischen den Kanalbohrungen 12 und 22 befinden. Die Zylinderbohrungen 25 dienen zur Aufnahme zweier Pumpenkolben 26, der Saugventile 27 und der Druckventile 28 der Pumpe, wie aus Figur 3 zu ersehen. Die einander zugekehrten Enden der Zylinderbohrungen 25 münden in eine Aufnahmebohrung 29, die sich im Zentrum der oberen Gehäuseseite 30 befindet und zur Aufnahme des elektromotorischen Pumpenantriebs 31 dient. Die Aufnahmebohrung 29 ist in mehreren Stufen von innen nach außen erweitert. Parallel zur Aufnahmebohrung 29 ist eine Durchgangsbohrung 32 als Kabeldurchführung vorgesehen. Die Zylinderbohrungen 25 sind jeweils durch eine Kanalbohrung 33 mit den Bohrungen 17 und durch eine Kanalbohrung 34 mit den Bohrungen 18 verbunden.

Das Gehäuse 1 wird mit zwei Größen von elektromagnetischen Steuerventilen bestückt. In die Aufnahmebohrungen 4 bis 7 werden Steuerventile größerer Abmessung, in die Aufnahmebohrungen 8 bis 11 Steuerventile kleinerer Abmessung eingesetzt. Die Steuerventile größerer Abmessungen werden in der Regel mit den Nehmerzylindern an der Vorderachse eines Fahrzeugs verbunden, da diese einen größeren Volumenbedarf haben. Die kleineren Steuerventile werden mit den Nehmerzylindern der Hinterachse verbunden. In die Aufnahmebohrungen 4, 6, 8, 10 werden in der Grundstellung offene Steuerventile, in die Aufnahmebohrungen 5, 7, 9, 11 werden in der Grundstellung geschlossene Steuerventile eingebaut. Mit der beschriebenen Gestaltung des Gehäuses 1 kann ein besonders kompaktes elektrohydraulische Aggregat zur Bremsschlupfregelung für eine Bremsanlage mit zwei unabhängigen Bremskreisen geschaffen werden. Der in Bezug auf die Mittelebene zwischen den Gehäuseflächen 23, 24 symmetrische Aufbau des Gehäuses 1 trägt der Aufteilung in zwei Bremskreise Rechnung.

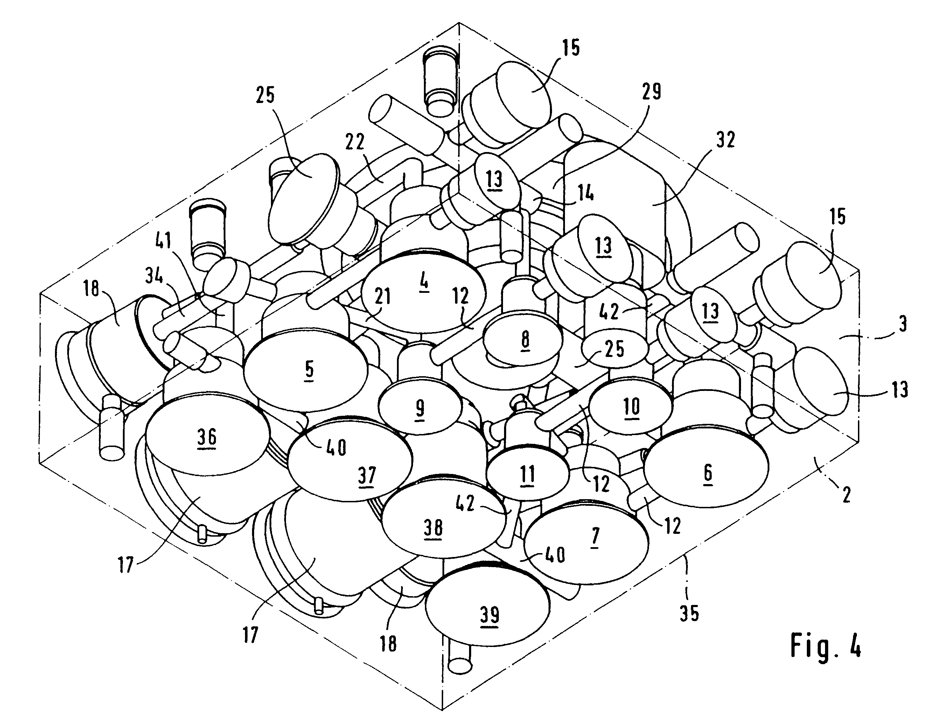

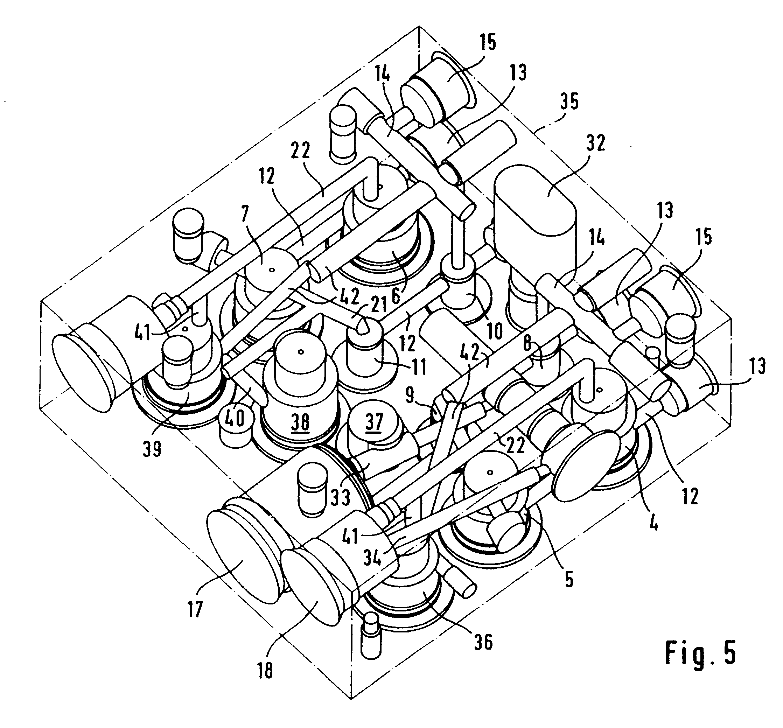

Die Figuren 4 und 5 zeigen ein Gehäuse 35 für ein elektrohydraulisches Aggregat, das zusätzlich zu den Funktionen, die mit dem oben beschriebenen Gehäuse 1 erreichbar sind, auch eine automatische, vom Fahrer unabhängige Betätigung der Bremsanlage zur Antriebsschlupf- oder Fahrstabilitätsregelung ermöglicht. Hierzu weist das Gehäuse 35 die nachfolgend beschriebenen, zusätzlichen und gegenüber dem Gehäuse 1 abweichenden Merkmale auf. Zwischen den Aufnahmebohrungen 5, 7, 9, 11 und den Bohrungen 17, 18 sind in einer gebogenen Reihe vier weitere Aufnahmebohrungen 36 bis 39 angeordnet, deren Durchmesser im wesentlichen dem Durchmesser der größeren Aufnahmebohrungen 4 bis 7 entspricht. Die Anordnung der Aufnahmebohrungen 36 bis 39 in einem Bogen wird durch den kleineren Durchmesser der Aufnahmebohrungen 8 bis 11 ermöglicht und hat den Vorteil, daß für die Unterbringung der Aufnahmebohrungen 36 bis 39 eine Verbreiterung des Gehäuses 35 im Vergleich zum Gehäuse 1 nicht erforderlich ist. Die Aufnahmebohrungen 36 bzw. 39 sind jeweils durch eine Kanalbohrung 40 mit der Aufnahmebohrung 37 bzw. 38 verbunden. Vom Boden der Aufnahmebohrungen 36, 39 führt weiterhin jeweils eine Kanalbohrung 41 zur Kanalbohrung 22. Die Kanalbohrungen 22 sind in Abweichung gegenüber dem Gehäuse 1 ebenso wie die Aufnahmebohrungen 4 und 6 von den Anschlußbohrungen 15 und den Aufnahmebohrungen 8, 10 getrennt. Stattdessen verbinden von den Kanalbohrungen 14 abzweigende Kanalbohrungen 42 die Anschlußbohrungen 15 mit den Aufnahmebohrungen 36, 39 und über die Kanalbohrungen 40 auch mit den Aufnahmebohrungen 37 und 38. Die Aufnahmebohrungen 37 und 38 sind außerdem an die Kanalbohrungen 33 angeschlossen und durch diese mit den Bohrungen 17 und den Zylinderbohrungen 25 verbunden. In Figur 5 sind zur besseren Darstellung eine Bohrung 17 und die Aufnahmebohrung 29 weggelassen.

In die Aufnahmebohrungen 36, 39 werden elektromagnetisch betätigbare Trennventile eingesetzt, die in der Grundstellung offen sind und die Anschlußbohrungen 15 mit den Aufnahmebohrungen 4 bzw. 6 verbinden. Werden die Trennventile betätigt, so sperren sie den Weg in Richtung der Anschlußbohrungen 15, solange der Druck in den Kanalbohrungen 22 einen vorgegebenen Grenzwert nicht überschreitet. In die Aufnahmebohrungen 37, 38 werden elektromagnetisch betätigbare Umschaltventile eingesetzt, die in der Grundstellung geschlossen sind und durch die bei Betätigung die zur Saugseite der Pumpenzylinder führenden Kanalbohrungen 33 mit den Anschlußbohrungen 15 und den daran angeschlossenen Geberzylindern verbunden werden. Befinden sich die Trennventile und die Umschaltventile in der Grundstellung, so entspricht der hydraulische Schaltplan des Gehäuses 35 in seiner Funktion demjenigen des Gehäuses 1. Werden die Trennventile und die Umschaltventile betätigt und der Pumpenantrieb eingeschaltet, so kann durch Ansteuerung der größeren Steuerventile in den Aufnahmebohrungen 4 bis 7 eine automatische Betätigung der an diesen Anschlußbohrungen angeschlossenen Nehmerzylinder zur Antriebsschlupf- oder Fahrstabilitätsregelung bewirkt werden.

### Bezugszeichenliste

- 1: Gehäuse
- 2: Unterseite
- 3: Gehäusefläche
- 4: Aufnahmebohrung
- 5: Aufnahmebohrung
- 6: Aufnahmebohrung
- 7: Aufnahmebohrung
- 8: Aufnahmebohrung
- 9: Aufnahmebohrung
- 10: Aufnahmebohrung
- 11: Aufnahmebohrung
- 12: Kanalbohrung
- 13: Anschlußbohrung
- 14: Kanalbohrung
- 15: Anschlußbohrung
- 16: Gehäusefläche
- 17: Bohrung
- 18: Bohrung
- 19: Stufe
- 20: Stufe
- 21: Kanalbohrung
- 22: Kanalbohrung
- 23: Gehäusefläche
- 24: Gehäusefläche
- 25: Zylinderbohrung
- 26: Pumpenkolben
- 27: Saugventil
- 28: Druckventil
- 29: Aufnahmebohrung
- 30: Gehäuseseite
- 31: Pumpenantrieb
- 32: Durchgangsbohrung
- 33: Kanalbohrung
- 34: Kanalbohrung
- 35: Gehäuse
- 36: Aufnahmebohrung
- 37: Aufnahmebohrung
- 38: Aufnahmebohrung
- 39: Aufnahmebohrung
- 40: Kanalbohrung
- 41: Kanalbohrung
- 42: Kanalbohrung

## Patentansprüche

1. Elektrohydraulisches Aggregat zur Druckregelung in Bremsanlagen für Kraftfahrzeuge mit Nehmerzylindern unterschiedlicher Volumenbedarf, mit in Aufnahmebohrungen (4 bis 11, 29, 36 bis 39) eines einteiligen Gehäuses (1) angeordneten mechanischen, hydraulischen und/oder elektrischen Bauelementen, wie Steuerventilen, Speicherkolben, Pumpenbauteilen und Pumpenantriebsteilen, wobei in einer ersten Gehäusefläche (2) in zwei Reihen paarweise nebeneinanderliegend mehrere parallele, mit Steuerventile versehene Aufnahmebohrungen (4 bis 11), in einer zweiten sich in Richtung der Reihen erstreckenden Gehäusefläche (16) parallele Bohrungen (17, 18) zur Bildung von Druckspeichern und Dämpfungskammern und in einer dritten, der zweiten Gehäusefläche (16) gegenüberliegenden Gehäusefläche (3) Anschlußbohrungen (13, 15) für Druckmittelleitungen, die zu den Geber- und Nehmerzylindern der Bremsanlage führen, vorgesehen sind, wobei zwischen den beiden Reihen von Aufnahmebohrungen (4 bis 11) für die Steuerventile sich in Richtung der Reihen erstreckende Zylinderbohrungen (25) zur Aufnahme der Kolben und Ventile der Pumpe und eine Aufnahmebohrung (29) für den Pumpenantrieb angeordnet sind und wobei die Bohrungen (17) der Druckspeicher zwischen den Bohrungen (18) der Dämpfungskammern liegen, dadurch **gekennzeichnet**, daß die Aufnahmebohrungen (8 bis 11) für die Steuerventile, die mit den Nehmerzylindern einer Fahrzeugachse verbunden werden, deren Volumenbedarf kleiner ist als der Volumenbedarf der Nehmerzylinder der anderen Fahrzeugachse, einen kleineren Durchmesser haben und aus der Reihenmitte in Richtung der dritten Gehäusefläche (3) versetzt angeordnet sind.

2. Aggregat nach Anspruch 1, dadurch **gekennzeichnet**, daß die für die Steuerventile vorgesehenen Aufnahmebohrungen (4 bis 11) gleichen Durchmessers in beiden Bohrungsreihen jeweils nebeneinander angeordnet sind.

3. Aggregat nach einem der vorhergehenden Ansprüche, dadurch **gekennzeichnet**, daß die Bohrungen (18) der Dämpfungskammern als Stufenbohrungen ausgebildet sind, deren im Durchmesser kleinere Stufe (19) über den Boden der benachbarten Aufnahmebohrung (5 bzw. 7) hinwegragt.

4. Aggregat nach Anspruch 3, dadurch **gekennzeichnet**, daß die Achsen der beiden Stufen (19, 20) der Bohrungen (18) der Dämpfungskammern parallel zueinander angeordnet sind.

5. Aggregat nach Anspruch 1, dadurch **gekennzeichnet**, daß zwischen den Bohrungen (17, 18) der Druckspeicher und der Dämpfungskammern und den diesen benachbarten Aufnahmebohrungen (5, 7, 9, 11) für die Steuerventile eine zusätzliche, im Bogen angeordnete Reihe von Aufnahmebohrungen (36 bis 39) großer Abmessung für die Aufnahme weiterer Steuerventile angeordnet ist, die zur automatischen Betätigung der Bremsanlage, z.B. zur Antriebsschlupf- oder Fahrstabilitätsregelung dienen.

## Claims

1. Electrohydraulic unit for pressure control in brake systems for automotive vehicles with slave cylinders of different volume requirements which includes mechanical, hydraulic and/or electric structural elements such as control valves, accumulator pistons, pump components and pump drive parts arranged in accommodating bores (4 to 11, 29, 36 to 39) of a one-part housing (1), wherein there is provision of several parallel accommodating bores (4 to 11) provided with control valves and disposed in pairs side by side in two rows in a first housing surface (2), parallel bores (17, 18) for forming pressure accumulators and damping chambers in a second housing surface (16) which extends in the direction of the rows, and connecting bores (13, 15) for pressure fluid lines in a third housing surface (3) which is opposite to the second housing surface (16), the said pressure fluid lines leading to the master and slave cylinders of the brake system, wherein between the two rows of accommodating bores (4 to 11) for the control valves there are arranged cylinder bores (25) which extend in the direction of the rows and accommodate the pistons and valves of the pump, and an accommodating bore (29) for the pump drive, and wherein the bores (17) of the pressure accumulators are disposed between the bores (18) of the damping chambers, **characterized** in that the accommodating bores (8 to 11) for the control valves which are connected to the slave cylinders of one vehicle axle that have a volume requirement lower than the volume requirement of the slave cylinders of the other vehicle axle, have a smaller diameter and are arranged offset from the middle of the row in the direction of the third housing surface (3).

2. Unit as claimed in claim 1,
**characterized** in that the accommodating bores (4 to 11) of equal diameter provided for the control valves in both bore rows are arranged side by side.

3. Unit as claimed in any one of the preceding claims,
**characterized** in that the bores (18) of the damping chambers are configured as stepped bores whose small-diameter step (19) projects over the bottom of the adjacent accommodating bore (5 or 7).

4. Unit as claimed in claim 3,
**characterized** in that the axes of the two steps (19, 20) of the bores (18) of the damping chambers are arranged in parallel to one another.

5. Unit as claimed in claim 1,
**characterized** in that an additional arcuate row of large-size accommodating bores (36 to 39) for accommodating further control valves is arranged between the bores (17, 18) of the pressure accumulators and the damping chambers and the accommodating bores (5, 7, 9, 11) adjacent thereto, the said control valves being used for the automatic activation of the brake system, for example, for traction slip or driving stability control.

## Revendications

1. Organe électro-hydraulique pour la régulation de la pression dans des systèmes de freinage de véhicules automobiles qui sont dotés de cylindres récepteurs ayant des besoins volumétriques différents, avec des éléments mécaniques, hydrauliques et/ou électriques, tels que des soupapes de commande, des pistons d'accumulation, des composants de pompe et des pièces d'entraînement de pompe, disposés dans des perçages de réception (4 à 11, 29, 36 à 39) d'un carter monobloc (1), plusieurs perçages de réception (4 à 11) parallèles, pourvus de soupapes de commande, étant prévus dans une première face (2) de carter en étant juxtaposés par paires en deux rangées, des perçages parallèles (17, 18) étant prévus, pour former des accumulateurs de pression et des chambres d'amortissement, dans une deuxième face (16) de carter s'étendant en direction des rangées, et des perçages de raccordement (13, 15), pour des conduites de fluide sous pression qui mènent aux maîtres-cylindres et aux cylindres récepteurs du système de freinage, étant prévus dans une troisième face (3) de carter, opposée à la deuxième face (16) de carter, des perçages cylindriques (25), s'étendant en direction des rangées et destinés à recevoir les pistons et soupapes de la pompe, et un perçage de réception (29) pour l'entraînement de la pompe, étant disposés entre les deux rangées de perçages de réception (4 à 11) pour les soupapes de commande, et les perçages (17) des accumulateurs de pression se trouvant entre les perçages (18) des chambres d'amortissement, **caractérisé** en ce que les perçages de réception (8 à 11), pour les soupapes de commande qui sont reliées aux cylindres récepteurs d'un essieu du véhicule dont le besoin volumétrique est inférieur au besoin volumétrique des cylindres récepteurs de l'autre essieu du véhicule, ont un diamètre plus petit et sont disposés en étant décalés, par rapport au milieu de la rangée, en direction de la troisième face (3) de carter.

2. Organe selon la revendication 1, **caractérisé** en ce que les perçages de réception (4 à 11) de même diamètre pour les soupapes de commande sont juxtaposés en deux rangées respectives de perçages.

3. Organe selon l'une quelconque des revendications précédentes, **caractérisé** en ce que les perçages (18) des chambres d'amortissement sont réalisés sous forme de perçages étagés, dont l'étage (19) de plus petit diamètre dépasse du fond du perçage de réception voisin (5 ou 7).

4. Organe selon la revendication 3, **caractérisé** en ce que les axes des deux étages (19, 20) des perçages (18) des chambres d'amortissement sont disposés en étant parallèles entre eux.

5. Organe selon la revendication 1, **caractérisé** en ce que, entre les perçages (17, 18) des accumulateurs de pression et des chambres d'amortissement et les perçages de réception (5, 7, 9, 11) pour les soupapes de commande qui en sont voisins, il est prévu une rangée supplémentaire, disposée en arc, de perçages de réception (36 à 39) de plus grande taille pour recevoir des soupapes de commande supplémentaires servant à un actionnement automatique du système de freinage, par exemple pour la régulation antipatinage ou la régulation de la stabilité de conduite.
